**Europäisches Patentamt**

**European Patent Office**

**Office européen des brevets**

(19)

(11) Numéro de publication: **0 097 574**
**B1**

(12) # FASCICULE DE BREVET EUROPEEN

(45) Date de publication du fascicule du brevet:
16.09.87

(51) Int. Cl.⁴: **G 06 F 7/50**

(21) Numéro de dépôt: **83401185.0**

(22) Date de dépôt: **09.06.83**

(54) Cellule d'addition binaire à trois entrées à propagation rapide de la somme, réalisé en circuit intégré.

(30) Priorité: **09.06.82 FR 8210025**

(43) Date de publication de la demande:
**04.01.84 Bulletin 84/1**

(45) Mention de la délivrance du brevet:
**16.09.87 Bulletin 87/38**

(84) Etats contractants désignés:
**DE GB IT NL**

(56) Documents cités:
**FR - A - 2 012 226**
**US - A - 3 590 230**

**IEEE JOURNAL OF SOLID-STATE CIRCUITS, vol. SC-13, no. 5, octobre 1978, pages 565-572, IEEE, New York, USA. H. J. DE MAN et al.: "High-speed MNOS circuits for ROM-accumulator and multiplier type digital filters"**

(73) Titulaire: **ITT INDUSTRIES INC., 320 Park Avenue, New York, NY 10022 (US)**

(72) Inventeur: **Colardelle, Joel Serge Gérard, Résidence Vignes de Bures Avenue de Champagne, F-91940 Les Ulis (FR)**

(74) Mandataire: **Polus, Camille et al, c/o Cabinet Lavoix 2, Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

L'invention se rapporte à une cellule d'addition binaire à trois entrées à propagation rapide de la somme, réalisée en circuit intégré.

Il est connu que l'on utilise généralement, pour réaliser des additionneurs ou des multiplieurs intégrés, des cellules d'addition à propagation rapide de la retenue. Cependant, les cellules d'addition à propagation rapide de la somme, c'est-à-dire où l'on privilégie la propagation de la somme par rapport à celle de la retenue, peuvent être particulièrement utiles par exemple dans les multiplieurs intégrés de type «pipe-line», ou à sommation série. Ce type de multiplieur, piloté par une horloge, et donc de type synchrone, effectue les produits partiels de la droite vers la gauche, c'est-à-dire des éléments binaires de poids les plus faibles vers les éléments binaires de poids les plus forts, exactement comme l'on réalise manuellement une multiplication, le décalage d'une puissance de deux supplémentaire étant réalisé à chaque temps d'horloge. Ce type de multiplieur est beaucoup moins rapide que les multiplieurs intégrés dits parallèles où la propagation des informations est réalisée de façon asynchrone, mais il permet de diminuer environ d'une puissance de dix la surface de silicium nécessaire à sa réalisation par rapport à la surface de silicium nécessaire à la réalisation d'un multiplieur de type parallèle de même puissance.

Le document FR A 2 012 226 décrit un multiplieur de ce type dans lequel la somme $S = A \oplus B \oplus C$ est obtenue à l'aide de deux portes OU-exclusif, la première recevant les deux variables d'entrée A et B pour fournir sur une entrée de la seconde porte une variable intermédiaire $X = A\overline{B}+\overline{A}B$, c'est-à-dire $A \oplus B$, la troisième variable d'entrée C étant fournie à la seconde entrée de cette seconde porte qui fornit sur sa sortie la somme S.

Dans ce même document, l'emploi de portes ET-exclusif (= OU-exclusif complémenté) à la place de portes OU-exclusif pour la portion de la somme est également envisagé, mais les conséquences relatives à l'emploi du circuit de retenue n'ont pas été envisagées.

Toutefois, le circuit d'élaboration de la retenue n'y est décrit que de façon symbolique et l'on n'y trouve pas une solution optimisée en ce qui concerne la surface de silicium nécessaire.

Le brevet US 3 590 230 offre une autre solution dans laquelle la somme S est obtenue par deux circuits OU-exclusif complémenté, mais la réalisation proposée, à base de transistors bipolaires et de résistances, est relativement complexe.

L'objet de la présente invention est donc de fournir une cellule d'addition binaire à trois entrées et deux sorties à propagation rapide de la somme $S = A \oplus B \oplus C$, réalisée en circuit intégré et conçue en vue d'occuper une surface de silicium aussi réduite que possible.

Selon l'invention, cette cellule d'addition comporte trois portes OU-exclusif complémenté à deux entrées et un circuit d'élaboration de la retenue $R = AB+AC+BC$. La première porte reçoit les deux premières variables d'entrée A et B et fournit la première variable intermédiaire $F_1 = \overline{A \oplus B}$ à la seconde porte qui reçoit, d'autre part, sur son autre entrée, la troisième variable d'entrée C. Cette deuxième porte fournit sur sa sortie la variable somme $S = A \oplus B \oplus C$. La troisième porte, recevant sur ses entrées respectivement les variables d'entrée A et C, fournit la deuxième variable intermédiaire $F_3 = \overline{A \oplus C}$ au circuit d'élaboration de la retenue qui reçoit, d'autre part, de la première porte sa sortie $F_1 = \overline{A \oplus B}$ et de la deuxième porte la sortie somme S. Ce circuit d'élaboration de la retenue fournit sur sa sortie la variable de retenue R.

L'invention sera mieux comprise et d'autres caractéristiques apparaîtront à l'aide de la description ci-après et des dessins joints où:

– la figure 1 représente un schéma permettant d'expliquer le principe de la cellule d'addition selon la présente invention; et

– la figure 2 représente un schéma donnant le détail des éléments de la cellule représentée sur la figure 1.

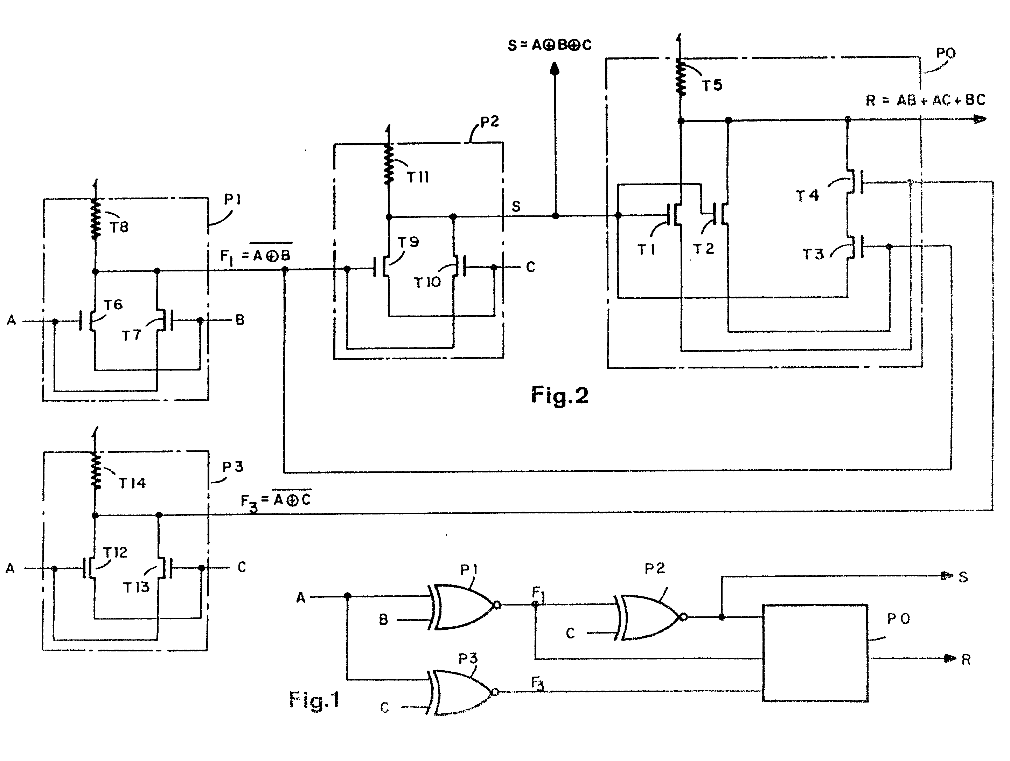

La figure 1 représente un schéma de la cellule d'addition à trois entrées A, B et C et deux sorties S et R selon la présente invention. Cette cellule comporte trois portes OU exclusif complémenté P1, P2 et P3 à deux entrées et un circuit P0 d'élaboration de la retenue R à partir des signaux de sortie fournis par les portes OU exclusif complémenté. La première porte P1 reçoit sur sa première entrée la première variable binaire A et sur sa deuxième entrée la deuxième variable binaire B. Elle fournit en sortie la première variable binaire intermédiaire $F_1 = \overline{A \oplus B}$. La deuxième porte OU exclusif complémenté P2 reçoit sur sa première entrée cette première variable intermédiaire $F_1$ et sur sa deuxième entrée la troisième variable binaire d'entrée C. Elle fournit en sortie la variable binaire de somme S qui constitue la première variable de sortie de la cellule d'addition. La troisième porte OU exclusif complémenté P3 reçoit sur sa première entrée la première variable binaire A et sur sa deuxième entrée la troisième variable binaire C. Elle fournit en sortie la deuxième variable intermédiaire $F_3 = \overline{A \oplus C}$. Le circuit P0 d'élaboration de la retenue R reçoit sur sa première entrée la sortie $S = A \oplus B \oplus C$ de la deuxième porte OU exclusif complémenté P2, sur sa deuxième entrée la sortie $F_1 = \overline{A \oplus B}$ de la première porte OU exclusif complémenté P1 et sur sa troisième entrée la sortie $F_3 = \overline{A \oplus C}$ de la troisième porte OU exclusif complémenté P3. Il fournit en sortie la variable binaire de retenue $R = AB+AC+BC$ qui constitue la deuxième variable binaire de sortie de la cellule d'addition.

La figure 2 représente une cellule d'addition, selon la présente invention, réalisée en circuit intégré MOS. Elle comporte quatorze éléments dont dix transistors et quatre éléments résistants. Le circuit P0 d'élaboration de la retenue R comporte quatre transistors T1, T2, T3 et T4 et un élément résistant T5. De façon à simplifier la description, le drain et la source de chacun des transistors seront confondus sous la dénomination commune de «borne», l'indétermination pouvant être levée de façon évidente par l'homme de l'art à partir du sens du courant imposé par la source utilisée. Seule la grille sera donc nommée. Les deux premiers transistors T1 et T2, l'élément résistant T5 et le dipôle, constitué par la mise en série des transistors T3 et T4, ont un point commun qui constitue la sortie de ce circuit d'élaboration de la retenue. La deuxième borne de l'élément résistant T5 est reliée à l'alimentation. La deuxième borne du transistor T1 est reliée à la grille du transistor T4. La deuxième borne du transistor T2 est reliée à la grille du transistor T3. Et la deuxième borne du dipôle constitué des transistors T3 et T4 est reliée à la grille du transistor T1, elle-même reliée à la grille du transistor T2. Ce point commun aux grilles de ces transistors T1 et T2 constitue la première entrée de ce circuit d'élaboration de la retenue R et reçoit de la deuxième porte P2 la variable somme S. La deuxième entrée de ce circuit est constituée par la grille du transistor T3 qui reçoit de la première porte P1 la variable $F_1 = \overline{A \oplus B}$. La troisième entrée de ce circuit est constituée par la grille du transistor T4 qui reçoit de la troisième porte P3 la variable $F_3 = \overline{A \oplus C}$. Ce circuit d'élaboration de la retenue réalise la fonction logique:

$$R = \overline{S}(\overline{F_1}F_3 + F_1\overline{F_3} + \overline{F_1}\overline{F_3}) + SF_1F_3$$

Cette expression correspond bien à l'expression logique de la retenue de l'addition de trois variables binaires $R = \overline{S}(\overline{F_1} + F_1\overline{F_3}) + SF_1F_3$, que l'on peut déduire de la table de vérité de l'addition donnée ci-dessous, dans le cas où l'on choisit d'écrire l'expression de cette retenue en fonction des trois variables S, $F_1 = \overline{A \oplus B}$ et $F_3 = \overline{A \oplus C}$

| A | B | C | R | S | $F_1 = \overline{A \oplus B}$ | $F_3 = \overline{A \oplus C}$ |
|---|---|---|---|---|---|---|
| 0 | 0 | 0 | 0 | 0 | 1 | 1 |
| 0 | 0 | 1 | 0 | 1 | 1 | 0 |
| 0 | 1 | 0 | 0 | 1 | 0 | 1 |
| 0 | 1 | 1 | 1 | 0 | 0 | 0 |
| 1 | 0 | 0 | 0 | 1 | 0 | 0 |
| 1 | 0 | 1 | 1 | 0 | 0 | 1 |
| 1 | 1 | 0 | 1 | 0 | 1 | 0 |
| 1 | 1 | 1 | 1 | 1 | 1 | 1 |

L'élaboration de la somme S et des variables intermédiaires $F_1$ et $F_3$ est réalisée à l'aide de trois cellules identiques, à transistors MOS, de type connu, permettant de réaliser, à l'aide de uniquement deux transistors MOS et un élément résistant, une porte OU exclusif complémenté.

La première porte P1 comporte deux transistors T6 et T7 et un élément résistant T8. Ces trois éléments ont une borne commune qui constitue la sortie de la porte fournissant la variable intermédiaire $F_1 = \overline{A \oplus B}$. L'élément résistant T8 a sa deuxième borne reliée à l'alimentation. Le premier transistor T6 a sa deuxième borne reliée à la grille du deuxième transistor T7 et reçoit, ainsi que cette grille, la deuxième variable d'entrée B. Le deuxième transistor T7 a sa deuxième borne reliée à la grille du premier transistor T6 et reçoit, ainsi que cette grille, la première variable d'entrée A.

La deuxième porte P2 comporte deux transistors T9 et T10 et un élément résistant T11. Ces trois éléments ont une borne commune comme les éléments T6, T7 et T8 de la première borne. Cette deuxième porte P2 est identique à la première, le transistor T9 remplaçant le transistor T6, le transistor T10 remplaçant le transistor T7 et l'élément résistant T11 remplaçant l'élément résistant T8. La grille du premier transistor T8 reçoit la première variable d'entrée de cette porte $F_1 = \overline{A \oplus B}$ et la grille du deuxième transistor T10 reçoit la deuxième variable d'entrée de cette porte qui est la troisième variable d'entrée C de la cellule d'addition.

La troisième porte P3 est identique aux deux premières portes P1 et P2 et comporte comme premier transistor le transistor T12, comme deuxième transistor le transistor T13 et comme élément résistant l'élément résistant T14. La grille du premier transistor reçoit la première variable d'entrée A de la cellule d'addition et la grille du deuxième transistor T13 reçoit sa deuxième variable d'entrée C qui constitue la troisième variable d'entrée de la cellule.

Bien que la présente invention ait été décrite dans le cadre d'une réalisation particulière, il est clair qu'elle n'est pas limitée auxdits exemples et qu'elle est susceptible de modifications ou de variantes sans sortir de son domaine.

**Revendications**

1. Cellule d'addition binaire à trois entrées A, B et C et deux sorties R et S à propagation rapide de la somme S = A $\oplus$ B $\oplus$ C, comportant deux portes OU exclusif complémenté (P1, P2) à deux entrées et un circuit (P0) d'élaboration de la retenue R = AB+AC+BC, la première porte (P1) recevant les deux premières variables d'entrée A et B et fournissant la première variable intermédiaire $F_1 = \overline{A \oplus B}$ à la seconde porte (P2) qui reçoit, d'autre part, sur son autre entrée la troisième variable d'entrée C et qui fournit sur sa sortie la variable somme S, caractérisée en ce qu'elle comporte en outre une troisième porte OU-exclusif complémenté (P3) recevant sur ses entrées respectivement les variables A et C et fournissant la deuxième variable intermédiaire $F_3 = \overline{A \oplus C}$ au circuit d'élaboration de retenue (P0) qui reçoit, d'autre part, de la première porte (P1) sa sortie $F_1 = \overline{A \oplus B}$ et de la deuxième porte (P2) sa sortie (S) et qui fournit sur sa sortie la retenue de sortie (R).

2. Cellule d'addition binaire à trois entrées et deux sorties selon la revendication 1, caractérisé en ce qu'elle est réalisée en circuit intégré à transistors MOS et en ce que ledit circuit d'élaboration de retenue (P0) comporte quatre transistors MOS (T1, T2, T3, T4) et un élément résistant (T5) dont une borne est reliée à l'alimentation et dont l'autre borne constitue la sortie fournissant la retenue, les deux premiers transistors (T1, T2), dont la grille est commandée par la sortie somme (S) fournie par la deuxième porte (P2), ainsi que le dipôle constitué par la mise en série du troisième et du quatrième transistor (T3, T4) ayant eux aussi une de leurs bornes reliée à cette borne de la résistance (T5) qui constitue la borne de sortie de la retenue, le premier transistor (T1) recevant sur son autre borne la sortie de la troisième porte (P3) qui d'autre part commande aussi la grille du quatrième transistor (T4), le deuxième transistor (T2) recevant sur son autre borne la sortie de la première porte (P1) qui d'autre part commande aussi la grille du troisième transistor (T3).

3. Cellule d'addition binaire à trois entrées et deux sorties selon l'une des revendications 1 ou 2, caractérisée en ce que les portes OU-exclusif complémenté (P1, P2, P3) comportent chacune deux transistors MOS (T6, T7; T9, T10; T12, T13) et un élément résistant (T8; T11; T14), ces trois éléments ayant une borne qui leur est commune et qui constitue la borne de sortie, l'élément résistant de la porte ayant son autre borne reliée à l'alimentation, le premier transistor de la porte recevant sur son autre entrée la deuxième variable d'entrée et sur sa grille la première variable d'entrée et le second transistor de la porte recevant sur son autre entrée la première variable d'entrée et sur sa grille la deuxième variable d'entrée.

## Claims

1. A binary adder cell with three inputs A, B and C and two outputs R and S with high-speed propagation of the sum $S = A \oplus B \oplus C$, which includes two two-input complemented exclusive-OR gates (P1, P2) and a circuit (P0) generating the carry $R = AB + AC + BC$, the first gate (P1) receiving the first two input variables A and B and furnishing the first intermediate variable $F_1 = \overline{A \oplus B}$ to the second gate (P2) which receives, on the other hand, at its other input the third input variable C and which furnishes at its output the sum variable S, characterized in that it also includes a third complemented exclusive-OR gate (P3) receiving at its inputs respectively the variables A and C and furnishing the second intermediate variable $F_3 = \overline{A \oplus C}$ to the carry-generating circuit (P0), which also receives, from the first gate (P1), its output $F_1 = \overline{A \oplus B}$ and from the second gate (P2) its output S and which furnishes at its output the output carry R.

2. A three-input two-output binary adder cell according to Claim 1, characterized in that it is of integrated MOS design, and that the said carry-generating circuit (P0) includes four MOS transistors (T1, T2, T3, T4) and a resistor (T5), one terminal of which is connected to the power supply and whose other terminal constitutes the output furnishing the carry, the first two transistors (T1, T2), whose gates are controlled by the sum output S furnished by the second gate (P2), as well as the dipole consisting of the third and fourth transistors (T3, T4) in series, also having one of their terminals connected to this terminal of resistor (T5) which constitutes the carry output terminal, the first transistor (T1) receiving at its other terminal the output of the third gate (P3) which also controls the gate of the fourth transistor (T4), the second transistor (T2) receiving at its other terminal the output of the first gate (P1), which also controls the gate of the third transistor (T3).

3. A three-input two-output binary adder cell according to any one of Claims 1 or 2, characterized in that the complemented exclusive-OR gates (P1, P2, P3) each include two MOS transistors (T6, T7; T9, T10; T12, T13) and one resistor (T8; T11; T14), these three elements having each one terminal in common which constitutes the output terminal, the resistor of the gate having its other terminal connected to the power supply, the first transistor of the gate receiving at its other input the second input variable and at its gate the first input variable and the second transistor of the gate receiving at its other input the first input variable and at its gate the second input variable.

## Patentansprüche

1. Binäre Addierzelle mit drei Eingängen A, B, C und zwei Ausgängen R, S und mit schnellem Durchlauf der Summe $S = A \oplus B \oplus C$, welche Addierzelle zwei Exclusiv-NOR-Gatter (P1, P2) mit je zwei Eingängen und eine Stufe (P0) zur Bildung des Übertrags $R = AB + AC + BC$ enthält, wobei das erste Exclusiv-NOR-Gatter (P1) die beiden ersten Eingangsvariablen A, B zugeführt erhält und eine erste Zwischenvariable $F_1 = \overline{A \oplus B}$ an das zweite Exclusiv-NOR-Gatter (P2) liefert, dessen anderem Eingang die dritte Variable C zugeführt ist und das an seinem Ausgang die Summe S liefert, dadurch gekennzeichnet, dass ein drittes Exclusiv-NOR-Gatter (P3) mit zwei Eingängen vorgesehen ist, deren jeweils einem die Variable A bzw. C zugeführt ist und das eine zweite Zwischenvariable $F_3 = \overline{A \oplus C}$ an die Stufe (P0) liefert, die vom ersten Exclusiv-NOR-Gatter (P1) das erste Zwischensignal $(F_1)$ und vom zweiten Exclusiv-NOR-Gatter (P2) die Summe (S) zugeführt erhält und am Ausgang den Ausgangsübertrag (R) liefert.

2. Addierzelle nach Anspruch 1, gekennzeichnet durch ihre Realisierung in integrierter MOS-Technik, wobei
– die Stufe (P0) vier MOS-Transistoren (T1, T2, T3, T4) und einen Widerstand (T5) enthält, dessen eines Ende mit der Versorgungsquelle verbunden ist und dessen anderes Ende der Übertragausgang ist,
– jeweils ein Anschluss des ersten und des zweiten Transistors (T1, T2), deren Gates am die Summe (S) liefernden Ausgang des zweiten Exclusiv-NOR-Gatters (P2) liegt, und der von der Serienschallung des dritten und des vierten Transistors (T3, T4) gebildete Dipol am den Übertragausgang bildenden Ende des Widerstands (T5) liegen,

– der andere Anschluss des ersten Transistors (T1) am Ausgang des dritten Exclusiv-NOR-Gatters (P3) liegt, der auch mit dem Gate des vierten Transistors (T4) verbunden ist, und

– der andere Anschluss des zweiten Transistors (T2) am Ausgang des ersten Exclusiv-NOR-Gatters (P1) liegt, der auch mit dem Gate des dritten Transistors (T3) verbunden ist.

3. Addierzelle nach Anspruch 1 oder 2, dadurch gekennzeichnet, dass

– die Exclusiv-NOR-Gatter (P1, P2, P3) jeweils zwei Transistoren (T6, T7; T9, T10; T12, T13) und einen Widerstand (T8, T11, T14) enthalten, dessen eines Ende jeweils mit der Versorgungsquelle verbunden ist und dessen anderes Ende jeweils der Ausgang des Gatters ist,

– dem anderen Eingang des ersten Transistors jeden Gatters die zweite und seinem Gate die erste Eingangsvariable zugeführt ist und

– dem anderen Eingang des zweiten Transistors jeden Gatters die erste und seinem Gate die zweite Eingangsvariable zugeführt ist.

Fig.1

Fig.2

$S = A \oplus B \oplus C$

$R = AB + AC + BC$

$F_1 = \overline{A \oplus B}$

$F_3 = \overline{A \oplus C}$

7